# EUROPÄISCHE PATENTANMELDUNG

(11) **EP 1 901 478 A1**
(43) Veröffentlichungstag der Anmeldung: **19.03.2008**
(21) Anmeldenummer: 06019182.2
(22) Anmeldetag: 13.09.2006
(51) Int. Cl.: H04L 12/24, H04L 29/08

(54) **Lastabhängige Verarbeitung von Leistungsdaten in einem Netzmanagementsystem**

(71) Anmelder: Nokia Siemens Networks GmbH & Co. KG, 81541 München (DE)
(72) Erfinder: Sanneck, Henning, Dr., 81667 München (DE); Schmelz, Lars Christoph, 85540 Haar (DE)

(57) **Zusammenfassung**

Die Erfindung betrifft ein Verfahren zum Betreiben eines zumindest einen Manager (EMS) und einen Agenten (NE) umfassenden Managementsystems, bei welchem Daten von dem Agenten (NE) an den Manager (EMS) übertragen werden. Die Daten werden verarbeitet, wobei die Datenverarbeitung durch den Agenten (NE) und/oder den Manager (EMS) erfolgt. Erfindungsgemäß wird von einer ersten Aufteilung der Datenverarbeitung zwischen dem Agenten (NE) und dem Manager (EMS) zu einer zweiten Aufteilung gewechselt. Weiterhin betrifft die Erfindung einen Manager (EMS), einen Agenten (NE) und ein Managementsystem zur Durchführung des Verfahrens.

## Beschreibung

Die Erfindung betrifft ein Verfahren zum Betreiben eines zumindest einen Manager und einen Agenten umfassenden Managementsystems, bei welchem Daten von dem Agenten an den Manager übertragen und diese Daten verarbeitet werden.

Gemäß den Prinzipien eines Managementnetzes, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine AgentenFunktion für die nächsthöhere Schicht zu.

Manager starten zur Netzüberwachung und -kontrolle Operationen, indem sie Anforderungen, sogenannte "requests", versenden, die von Agenten ausgeführt werden, und erhalten entsprechende Rückmeldungen, sogenannte "responses", von den Agenten. Elemente des Netzes, auch als Ressourcen des Netzes bezeichnet, die gemäß der Hierarchie die Rolle eines Agenten ausüben, erkennen relevante Ereignisse, sogenannte "events", wie z.B. Alarme, generieren entsprechende Mitteilungen, sogenannte "notifications", und übertragen sie in Form von Ereignismeldungen, sogenannten "event reports", an Manager, um ein effizientes Netzmanagement zu ermöglichen.

Das Netzmanagement kann unter anderem das Fehlermanagement (Fault-Management) und/oder das Konfigurationsmanagement (Configuration Management) und/oder das Sicherheitsmanagement (Security-Management) und/oder das des Abrechnungsmanagement (Accounting-Management) und/oder das Leistungsmanagement (Performance-Management) umfassen. Durch das Netzmanagement sollen geeignete Mechanismen zur Informationsverteilung und - verwaltung bereitgestellt werden, so dass bei Bedarf ein umfassendes Bild über den Netzzustand zur Verfügung steht und die einzelnen Ressourcen des Telekommunikationsnetzes effizient überwacht und konfiguriert werden können.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll, wie z.B. CMIP (Common Management Information Protocol) nach ITU-T X.711, CORBA (Common Object Request Broker Architecture) oder SNMP (Simple Network Management Protocol), und durch ein Objektmodell gekennzeichnet sind. Objektmodelle dienen der Modellierung von Ressourcen des Telekommunikationsnetzes, wobei diese Ressourcen bei der Modellierung in Objektklassen eingeteilt werden.

Solche Schnittstellen gibt es beispielsweise zwischen einerseits der Netzelementmanagement-Ebene (Network Element Management Level) und andererseits der Netzelement-Ebene (Network Element Level). Ein Beispiel für Netzeinrichtungen dieser Manager-Agent-Schnittstelle stellen die Betriebs- und Wartungszentren (OMC: Operation and Maintenance Center) auf der Seite der Netzelementmanagement-Ebene dar, sowie auf der Seite der Netzelement-Ebene Einrichtungen wie z.B. Basisstationen des Basisstationssystems (BSS: Base Station Subsystem) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Funkzugangspunkte eines WLAN-Systems (WLAN: Wireless Local Area Network) beispielsweise gemäß einem der IEEE 802.11-Standards.

Management-Schnittstellen bzw. Manager-Agent-Schnittstellen existieren auch zwischen einerseits der Netzmanagement-Ebene (Network Management Level) und andererseits der Netzelementmanagement-Ebene. Ein Beispiel für Netzeinrichtungen zu dieser Manager-Agent-Schnittstelle stellen die Netzmanagementzentren (NMC: Network Management Center) auf der Seite der Netzmanagement-Ebene und die Betriebs- und Wartungszentren (OMC: Operation and Maintenance Center) auf der Seite der Netzelementmanagement-Ebene z.B. im genannten GSM oder einem anderen Mobilfunk- oder Telekommunikationsnetz dar.

Der Erfindung liegt die Aufgabe zugrunde, ein effizientes Verfahren zum Betreiben eines Managementsystems und Vorrichtungen zur Durchführung des Verfahrens aufzuzeigen.

Diese Aufgabe wird durch ein Verfahren mit den Merkmalen des Anspruchs 1, sowie durch einen Manager, einen Agenten und ein Managementsystem mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zum Betreiben eines zumindest einen Manager und einen Agenten umfassenden Managementsystems werden Daten von dem Agenten an den Manager übertragen. Die Daten werden verarbeitet, wobei die Daten-Verarbeitung durch den Agenten und/oder den Manager erfolgt. Erfindungsgemäß wird von einer ersten Aufteilung der Datenverarbeitung zwischen dem Agenten und dem Manager zu einer zweiten Aufteilung der Datenverarbeitung zwischen dem Agenten und dem Manager gewechselt.

Dass die Datenverarbeitung durch den Agenten und/oder den Manager erfolgt, bedeutet, dass es möglich ist, dass der Agent alle Schritte dieser Datenverarbeitung durchführt, so dass von dem Agenten die vollständig verarbeiteten Daten an den Manager übertragen werden und der Manager keine weiteren Schritte der Datenverarbeitung durchführt. Alternativ ist es möglich, dass der Manager alle Schritte der Datenverarbeitung durchführt, so dass von dem Agenten die Daten unverarbeitet an den Manager übertragen werden, welcher nach Empfang der Daten die vollständige Verarbeitung durchführt. Ferner ist es möglich, dass manche Schritte der Datenverarbeitung von dem Agenten und manche Schritte der Datenverarbeitung von dem Manager durchgeführt werden. Die betrachtete Datenverarbeitung beinhaltet somit lediglich Verarbeitungsschritte, welche sowohl von dem Agenten als auch von dem Manager ausführbar sind; d.h. es handelt sich hierbei um Verarbeitungsschritte, welche von dem Manager auf den Agenten oder von dem Agenten auf den Manager umverteilbar sind.

Die Festlegung, welche Teile der Datenverarbeitung von dem Agenten und dem Manager jeweils durchzuführen sind, erfolgt gemäß der verwendeten Aufteilung der Datenverarbeitung zwischen dem Agenten und dem Manager. Gemäß der Erfindung ist diese Aufteilung dynamisch, d.h. zuerst wird eine erste und im Anschluss eine unterschiedliche zweite Aufteilung verwendet. Der Wechsel der Aufteilung erfolgt vorzugsweise im laufenden Betrieb, d.h. ohne dass der Manager und der Agent ihre sonstige Funktionsweise unterbrechen müssen.

Besteht die Datenverarbeitung beispielsweise aus zehn Verarbeitungsschritten, so könnte gemäß der ersten Aufteilung der Agent die Verarbeitungsschritte 1 bis 3 durchführen, und der Manager die Verarbeitungsschritte 4 bis 10, während gemäß der zweiten Aufteilung der Agent die Verarbeitungsschritte 1 bis 5 und der Manager die Verarbeitungsschritte 6 bis 10 durchführen könnte. Vorzugsweise sind die Aufteilungen der Datenverarbeitung derart ausgebildet, dass jeder Verarbeitungsschritt der Datenverarbeitung entweder von dem Manager oder von dem Agenten, nicht aber von beiden ausgeführt werden.

In Ausgestaltung der Erfindung führt der Manager bei der zweiten Aufteilung gegenüber der ersten Aufteilung weniger Datenverarbeitung durch, und der Agent führt bei der zweiten Aufteilung gegenüber der ersten Aufteilung mehr Datenverarbeitung durch. In diesem Fall erfolgt eine Umverteilung der Datenverarbeitung derart, dass dasjenige der Datenverarbeitung, welches der Manager zwar vor, jedoch nicht mehr nach der Umverteilung durchführt, nach der Umverteilung von dem Agenten durchgeführt wird.

In einer anderen Ausgestaltung der Erfindung führt der Manager bei der zweiten Aufteilung gegenüber der ersten Aufteilung mehr Datenverarbeitung durch, und der Agent führt bei der zweiten Aufteilung gegenüber der ersten Aufteilung weniger Datenverarbeitung durch. In diesem Fall erfolgt eine Umverteilung der Datenverarbeitung derart, dass dasjenige der Datenverarbeitung, welches der Agent zwar vor, jedoch nicht mehr nach der Umverteilung durchführt, nach der Umverteilung von dem Manager durchgeführt wird.

Einer bevorzugten Weiterbildung der Erfindung gemäß wird eine Entscheidung zum Wechsel von der ersten zu der zweiten Aufteilung in Abhängigkeit von einer oder mehreren der folgenden Größen getroffen: Informationen betreffend eine Auslastung des Agenten, Informationen betreffend eine Auslastung des Managers, Informationen betreffend eine Auslastung einer Kommunikationsschnittstelle zwischen dem Manager und dem Agenten. Die Entscheidung kann z.B. von dem Manager oder dem Agenten getroffen werden, oder auch von einer von dem Manager und dem Agenten getrennten Einrichtung des Managementsystems. Die Auslastungen können hierbei an sich auf verschiedene Arten gemessen und ausgedrückt werden. Vorzugsweise stellen die Informationen betreffend die Auslastung des Agenten bzw. des Managers ein Maß dafür dar, in welchem Umfang oder in welcher Zeit eine Datenverarbeitung durch den Manager bzw. den Agenten möglich ist. Den Informationen betreffend die Auslastung der Kommunikationsschnittstelle zwischen dem Manager und dem Agenten ist vorzugsweise entnehmbar, mit welcher Verzögerung und/oder mit welcher Fehleranfälligkeit eine Übertragung von dem Agenten zu dem Manager bewirkt werden kann. Besonders vorteilhaft ist es, wenn die Auslastung bzw. die Auslastungen als binäre Größen eingesetzt werden. In diesem Fall zeigen beispielsweise die Informationen betreffend die Auslastung des Agenten an, ob der Agent ausgelastet ist oder nicht. Alternativ kann die Auslastung als analoge Größe eingesetzt werden, welche z.B. einen Prozentwert anzeigt.

In Ausgestaltung der Erfindung wird die Entscheidung unter der Voraussetzung getroffen, dass eine oder mehrere der oben genannten Auslastungs-Informationen einen Schwellenwert über- oder unterschreitet. Das Über- oder Unterschreiten stellt in diesem Fall den Auslöser für die Entscheidung und somit auch für den Wechsel von der ersten zu der zweiten Aufteilung dar. Es ist hierbei möglich, dass verschiedene Schwellenwerte für die Auslastungs-Informationen von Manager, Agent und Kommunikationsschnittstelle vorgesehen sind.

Einer Weiterbildung der Erfindung gemäß wird aufgrund des Wechsels eine Auslastung des Agenten reduziert. Zusätzlich oder alternativ kann aufgrund des Wechsels eine Auslastung des Managers reduziert werden. Weiterhin kann zusätzlich oder alternativ aufgrund des Wechsels eine Auslastung einer Kommunikationsschnittstelle zwischen dem Manager und dem Agenten reduziert werden. Die jeweilige Reduktion der Auslastung kann hierbei der Grund für den Wechsel darstellen; es ist jedoch auch möglich, dass mit dem Wechsel ein anderes Ziel verfolgt wird, wobei die Reduktion eine Möglichkeit zur Erreichung dieses Ziels darstellt.

Besonders vorteilhaft ist es, wenn die verarbeiteten Daten dem Manager bei Verwendung der zweiten Aufteilung schneller zur Verfügung stehen als bei Verwendung der ersten Aufteilung. Bei den verarbeiteten Daten handelt es sich hierbei um die Daten, welche nach Abschluss der vollständigen Datenverarbeitung vorliegen.

In Ausgestaltung der Erfindung wird eine Entscheidung zum Wechsel von der ersten zu der zweiten Aufteilung getroffen und es ergehen Anweisungen zur Umsetzung der Entscheidung lediglich an den Agenten. Dies kann z.B. dadurch realisiert werden, dass die Entscheidung von einem Bestandteil des Agenten getroffen wird oder von einer von dem Agenten und dem Manager gesonderten Einrichtung. Das Ergehen der Anweisung lediglich an den Agenten bedeutet, dass der Manager keine Anweisung zur Umsetzung der Entscheidung empfängt. Der Manager kann jedoch vorzugsweise die Auswirkungen, welche die Entscheidung für seine Datenverarbeitung hat, an den vom Agenten an ihn gesendeten Daten erkennen.

Besonders vorteilhaft ist die Anwendung des beschriebenen Verfahrens auf Performance Management Daten. Performance Management Daten von Mobilunkkommunikationssystemen werden z.B. vorgestellt in
- 3GPP TS 32.403: Telecommunication management; Performance Management (PM); Performance measurements - UMTS and combined UMTS/GSM; version 6.9.0 (Release 6), October 2005.
- ETSI TS 100.615 (3GPP TS 12.04 Release 1999), version 8.1.0: Digital cellular telecommunications system (Phase 2+); Performance data measurements.

Der erfindungsgemäße Manager für ein Managementsystem, welches zumindest den Manager und einen Agenten umfasst, weist Mittel auf zum Empfangen von Daten von dem Agenten, Mittel zum Verarbeiten der Daten gemäß einer ersten Aufteilung der Datenverarbeitung zwischen dem Agenten und dem Manager, sowie Mittel zum Wechseln der Aufteilung der Datenverarbeitung zwischen dem Agenten und dem Manager von der ersten Aufteilung zu einer zweiten Aufteilung.

Der erfindungsgemäße Agent für ein Managementsystem, welches zumindest einen Manager und den Agenten umfasst, weist Mittel auf zum Verarbeiten von Daten gemäß einer ersten Aufteilung der Datenverarbeitung zwischen dem Agenten und dem Manager, Mittel zum Senden der Daten zu dem Manager, sowie Mittel zum Wechseln der Aufteilung der Datenverarbeitung zwischen dem Agenten und dem Manager von der ersten Aufteilung zu einer zweiten Aufteilung.

Das erfindungsgemäße Managementsystem umfasst zumindest einen erfindungsgemäßen Manager und einen erfindungsgemäßen Agenten; es kann weitere Managementeinrichtungen beinhalten.

Der erfindungsgemäße Manager, der erfindungsgemäße Agent und das erfindungsgemäße Managementsystem eignen sich insbesondere zur Durchführung des erfindungsgemäßen Verfahrens, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt aus einem Managementsystem,
- Figur 2:: eine Tabelle mit Auslastungsgraden entsprechend einem Anfangs-Zustand,
- Figur 3:: eine Tabelle mit Auslastungsgraden entsprechend einem End-Zustand.

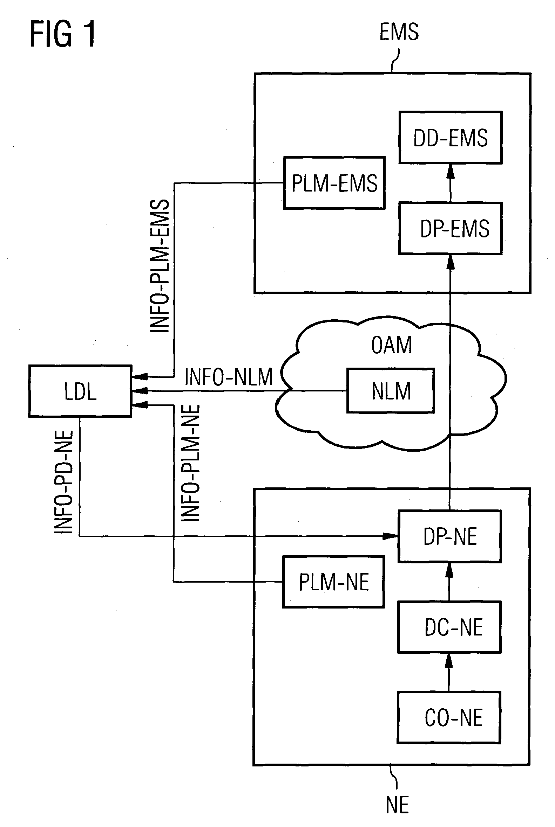

Der in Figur 1 gezeigte Ausschnitt aus einem Managementsystem umfasst das Netzelement NE (NE: Network Element) und den Elementmanager EMS (EMS: Element Management System), wobei ein Manager-Agenten-Verhältnis zwischen dem Elementmanager EMS und dem Netzelement NE besteht. Die Erfindung ist auf das Management verschiedenartiger Systeme anwendbar. Im folgenden wird als konkretes Beispiel - ohne die Erfindung hierauf zu beschränken - ein Managementsystem eines Mobilfunkkommunikationssystems betrachtet. Es kann sich bei dem Netzelement NE somit beispielsweise um eine Basisstation, bei UMTS als NodeB bezeichnet, handeln.

Die Erfindung betrifft die Verarbeitung von Daten. Als konkretes Beispiel wird im folgenden davon ausgegangen, dass es sich bei diesem Daten um Daten des Performance Managements handelt. Das Performance Management dient der Erfassung und Überwachung von Systemen und Systemparametern, beinhaltet auch die Durchführung von Messungen sowie das Be- und Verarbeiten von leistungsbezogenen Daten. Bei Performance Daten handelt es sich um Daten betreffend überwachte Objekte, die so genannten Managed Objects; diese Daten werden in der Regel als Zählerwerte (englisch: Counter) erfasst. Aufgrund von sporadischen oder periodischen Messungen der Counter werden Berichte (englisch: Reports) erstellt und an den jeweiligen Manager versendet. Vom Manager können für den Netzbetreiber (englisch: Operator) interessante Größen dargestellt und abgespeichert werden.

Zur Vereinfachung ist in Figur 1 der Fall dargestellt, dass der Elementmanager EMS lediglich mit einem einzelnen Netzelement verbunden ist. Die Erfindung kann auch auf den Fall angewandt werden, dass der Elementmanager EMS Performance Daten von mehreren Netzelementen empfängt. Die Auswirkung der im folgenden beschriebenen Vorgehensweise auf den Elementmanager EMS hängt in einer solchen Situation der Anbindung mehrerer Netzelemente an den Elementmanager EMS von der Anzahl der Netzelemente und dem Umfang der jeweils vorhandenen Performance Daten ab.

Gemäß Figur 1 weist das Netzelement NE einen Bestandteil CO-NE (CO: Counter Object) auf, welchem die an den Elementmanager EMS zu versendenden Performance Daten als Rohdaten vorliegen. Bei den Rohdaten handelt es sich vorzugsweise um Zählerwerte. Die Rohdaten werden an den Bestandteil DC-NE (DC: Data Collector) weitergeleitet, welcher für das Sammeln der Rohdaten zuständig ist. Die Performance Daten werden, entweder als Rohdaten direkt von dem Bestandteil DC-NE oder verarbeitet durch den Bestandteil DP-NE (DP: Data Processing) des Netzelementes NE, an den Elementmanager EMS gesendet. Die Übertragung zwischen dem Netzelement NE und dem Elementmanager EMS erfolgt hierbei über das Netz OAM (OAM: Operation Administration Maintenance).

Der Elementmanager EMS verfügt über den Bestandteil DP-EMS (DP: Data Processing), welcher für die Verarbeitung der von dem Netzelement NE empfangenen Performance Daten zuständig ist. Der Bestandteil DD-EMS (DD: Data Display) des Elementmanagers EMS dient der Darstellung der von dem Bestandteil DP-EMS ausgegebenen Daten für den Operator.

Eine Verarbeitung von Performance Daten kann in dem Bestandteil DP-NE des Netzelementes NE und/oder in dem Bestandteil DP-EMS des Elementmanagers EMS erfolgen. Beispiele für die Verarbeitung von Performance Daten sind: Ermittlung von Schlüsselwerten, so genannten KPI-Werten (KPI: Key Performance Indicator), z.B. für Schwellenwertentscheidungen als Auslöser für Alarme; Umwandlung der Performance Daten von einem ersten in ein zweites Format; Berechung von Korrelationen verschiedener Daten; Auswertung von Daten über einen bestimmten Zeitraum. Es ist sowohl möglich, dass die Verarbeitung der Performance Daten vollständig durch den Bestandteil DP-NE des Netzelementes NE erfolgt, so dass die von dem Elementmanager EMS empfangenen Performance Daten nicht durch den Bestandteil DP-EMS verarbeitet, sondern direkt durch den Bestandteil DD-EMS darstellbar sind, als auch, dass die Verarbeitung der Performance Daten vollständig durch den Bestandteil DP-EMS des Elementmanagers EMS erfolgt, so dass durch den Bestandteil DP-NE des Netzelementes NE keine Verarbeitung erfolgt, als auch, dass manche Verarbeitungsschritte von dem Bestandteil DP-NE des Netzelementes NE und andere von dem Bestandteil DP-EMS des Elementmanagers durchgeführt werden.

Für den Betreiber des Systems ist es erstrebenswert, die Performance Daten nach ihrer Erfassung im Bestandteil DC-NE möglichst rasch der Darstellung durch den Bestandteil DP-EMS zugänglich zu machen. Hierfür ist die Verarbeitung der Performance Daten, welche im Bestandteil DP-NE und/oder DP-EMS erfolgt, und die Übertragung der Performance Daten von dem Netzelement NE zum Elementmanager EMS über das Netz OAM nötig. Relevant für die minimale Zeitspanne, welche von der Erfassung im Bestandteil DC-NE bis zur Darstellung durch den Bestandteil DP-EMS verstreicht, sind somit die Auslastung des Netzelementes NE, die Auslastung des Elementmanager EMS, und die Auslastung des Netzes OAM. Diese drei Größen variieren in der Regel mit der Zeit:
- Handelt es sich bei dem Netzelement NE beispielsweise um eine Basisstation, so ist diese stark ausgelastet, wenn sie mit einer Vielzahl von Teilnehmerstationen kommuniziert. Ihre Auslastung schwankt somit u.a. abhängig von der Anzahl der aktiven Teilnehmerstationen. Beispielhaft für eine Situation mit einer starken Auslastung einer Basisstation ist die funktechnische Versorgung einer belebten Straße während der Hauptverkehrszeit oder eines Fußballstadions während einem Spiel. Auch das Durchführen von anderen Management-Funktionen neben dem Performance Management steigert die Auslastung des Netzelementes NE.
- Der Elementmanager EMS ist neben dem Performance Management auch für andere Managementfunktionen zuständig. Der Arbeitsaufwand für diese Managementfunktionen ist in der Regel nicht konstant. So ist der Elementmanager EMS z.B. dann stark ausgelastet, wenn eine Vielzahl von Alarmen in etwa gleichzeitig eingehen. Dies kann durch einen Ausfall in einer bestimmten von dem Elementmanager EMS überwachten Netzregion verursacht werden.
- Das Netz OAM ist stark ausgelastet, wenn gleichzeitig eine Vielzahl von Management Daten zu übertragen sind. Dies betrifft nicht nur die Übertragung von Performance Daten zwischen dem Netzelement NE und dem Elementmanager EMS, sondern auch die Übertragung anderer Management Daten von dem Netzelement NE zu dem Elementmanager EMS und von dem Elementmanager EMS zu dem Netzelement NE, sowie die Übertragung von Management Daten zwischen anderen Managementeinrichtungen. Für die Auslastung des Netzes OAM wird vorzugsweise eine die Ende-zu-Ende Verbindung zwischen dem Netzelement NE und dem Elementmanager EMS beschreibende Größe eingesetzt.

Ist das Netzelement NE stark ausgelastet, so sollte versucht werden, die Verarbeitung der Performance Daten vollständig oder zumindest teilweise auf den Elementmanager EMS zu übertragen. Ist hingegen der Elementmanager EMS stark ausgelastet, so sollte versucht werden, die Verarbeitung der Performance Daten vollständig oder zumindest teilweise durch das Netzelement NE durchführen zu lassen. Bei einer Überlastung der Netzes OAM sollte versucht werden, möglichst wenig Daten über das Netz OAM zu übertragen. Dies kann dadurch realisiert werden, dass die Verarbeitung der Performance Daten weitgehend von dem Netzelement NE übernommen wird. Denn üblicherweise ist das Volumen der Performance Daten nach der DatenVerarbeitung kleiner als vor der Datenverarbeitung, so dass eine Übertragung von verarbeiteten Performance Daten das Netz OAM weniger belastet als eine Übertragung von weniger verarbeiteten Performance Daten oder Rohdaten.

Zur Überwachung von Auslastungen ist in dem Managementsystem die Einrichtung LDL (LDL: Load Distribution Logic) vorgesehen. Diese kann - wie in Figur 1 dargestellt - als eigenständige Einrichtung, d.h. getrennt von dem Netzelement NE und dem Elementmanager EMS, realisiert sein. Alternativ hierzu kann sie Bestandteil des Elementmanagers EMS oder des Netzelementes NE sein. Bei einer Realisierung der Einrichtung LDL als Bestandteil des Netzelementes NE ist vorzugsweise jedes Netzelement NE, welches Performance Daten an den Elementmanager EMS sendet, mit einer solchen Einrichtung LDL ausgestattet. Von Vorteil bei der Realisierung der Einrichtung LDL als Bestandteil des Elementmanagers EMS ist, dass die Einrichtung LDL in diesem Fall als zentrale Steuereinrichtung auf eine Mehrzahl von von dem Elementmanager EMS überwachte Agenten auf Netzelementen Einfluss nehmen und somit eine Koordination des Performance Management des Elementmanagers EMS in Bezug auf verschiedene Agenten erreicht werden kann.

Für das Netzelement NE existiert der Bestandteil PLM-NE (PLM: Processing Load Monitor), welcher die Auslastung des Netzelementes NE erfasst und diese als Auslastungs-Information INFO-PLM-NE an die Einrichtung LDL übermittelt. Ebenso verfügt der Elementmanager EMS über den Bestandteil PLM-EMS, welcher die Auslastung des Elementmanagers EMS erfasst und diese als Auslastungs-Information INFO-PLM-EMS an die Einrichtung LDL übermittelt. Weiterhin ist für das Netz OAM die Einrichtung NLM (NLM: Network Load Monitor) vorhanden, welche die Auslastung des Netzes OAM erfasst und die Einrichtung LDL hierüber mittels der Auslastungs-Information INFO-NLM informiert. Die Einrichtung NLM kann - wie in Figur 1 dargestellt - als eigenständige Einrichtung realisiert sein, welche direkt mit der Einrichtung LDL kommuniziert. Alternativ hierzu ist es möglich, dass die Einrichtung NLM dem Elementmanager EMS zugeordnet ist. Die Ermittlung der Auslastungen (englisch: load) kann auf verschiedene Weisen erfolgen und ist für das Verständnis der Erfindung nicht relevant. Wesentlich ist, dass geeignete Auslastungs-Information INFO-PLM-EMS, INFO-PLM-NE und INFO-NLM der Einrichtung LDL zur Verfügung stehen.

Die Einrichtung LDL empfängt von dem Netzelement NE, von dem Elementmanager EMS, und von dem Netz OAM die jeweiligen aktuellen Auslastungs-Information INFO-PLM-EMS, INFO-PLM-NE und INFO-NLM. Unter Verwendung dieser Auslastungs-Information INFO-PLM-EMS, INFO-PLM-NE und INFO-NLM trifft die Einrichtung LDL eine Entscheidung darüber, in welchem Umfang die Verarbeitung der Performance Daten von dem Bestandteil DP-NE des Netzelementes NE und von dem Bestandteil DP-EMS des Elementmanagers EMS jeweils durchzuführen ist. Im Anschluss an diese Entscheidung informiert die Einrichtung LDL das Netzelement NE mit der Anweisungsnachricht INFO-DP-NE darüber, welche Verarbeitung der Performance Daten von dem Netzelement NE durchzuführen sind.

In Figur 1 ist der Fall dargestellt, dass eine Anweisungsnachricht von der Einrichtung LDL lediglich an das Netzelement NE versendet wird, und somit keine Anweisung an den Elementmanager EMS ergeht. In diesem Fall erkennt der Elementmanager EMS anhand der von dem Netzelement NE an den Elementmanager EMS gesendeten Performance Daten, ob und gegebenenfalls welche Verarbeitung der Performance Daten von dem Bestandteil DP-EMS des Elementmanagers EMS durchzuführen sind. Alternativ hierzu ist es möglich, dass die Einrichtung LDL sowohl das Netzelement NE als auch den Elementmanager EMS über den Umfang der jeweils durchzuführenden Verarbeitung der Performance Daten informiert.

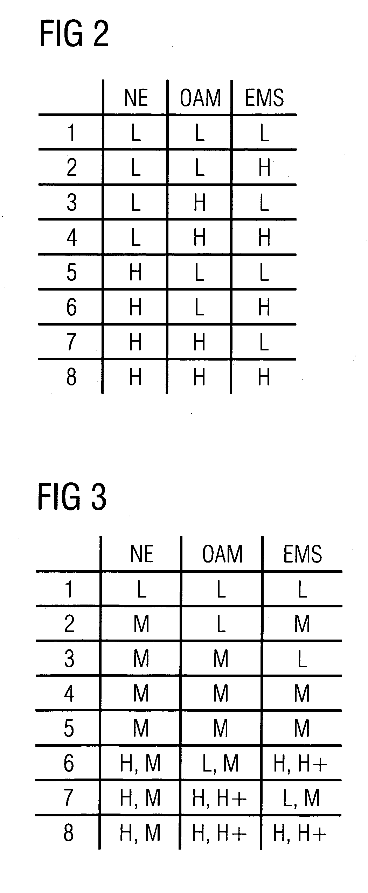

Die Entscheidungen der Einrichtungen dienen vorrangig dem Ziel, die Performance Daten möglichst rasch dem Operator zur Verfügung zu stellen, d.h. dem Bestandteil DD-EMS zuzuführen. Hierzu können anhand der Auslastungs-Information INFO-PLM-EMS, INFO-PLM-NE und INFO-NLM Engpässe erkannt und behoben werden. Beispiele für Entscheidungen der Einrichtung LDL abhängig von den aktuellen Auslastungs-Information INFO-PLM-EMS, INFO-PLM-NE und INFO-NLM werden anhand der Figuren 2 und 3 erläutert. Hierbei zeigen die Figuren 2 und 3 jeweils eine Tabelle mit Auslastungsgraden des Netzelementes NE, entsprechend der zweiten Spalte der Tabellen, Auslastungsgraden des Netzes OAM, entsprechend der dritten Spalte der Tabellen, sowie Auslastungsgraden des Elementmanagers EMS, entsprechend der vierten Spalte der Tabellen. Es werden 8 Ausgangs-Situationen betrachtet, wobei die erste Ausgangs-Situation der ersten Zeile der Figur 2 entspricht, die zweite Ausgangs-Situation der zweiten Zeile der Figur 2, usw. Die erste Zeile der Figur 3 entspricht der End-Situation nach Umsetzung der von der Einrichtung LDL ausgehend von der Ausgangs-Situation der ersten Zeile der Figur 2 getroffenen Entscheidung, die zweite Zeile der Figur 3 entspricht der End-Situation nach Umsetzung der von der Einrichtung LDL ausgehend von der Ausgangs-Situation der zweiten Zeile der Figur 2 getroffenen Entscheidung, usw.

Ein Auslastungsgrad mit dem Wert L entspricht einer niedrigen (englisch: low) Auslastung, ein Auslastungsgrad mit dem Wert M entspricht einer mittleren (englisch: medium) Auslastung, ein Auslastungsgrad mit dem Wert H entspricht einer starken (englisch: high) Auslastung, und ein Auslastungsgrad mit dem Wert H+ entspricht einer übermäßig starken Auslastung. Bei den Ausgangs-Situationen der Figur 2 wird die Auslastung als binäre Größe eingesetzt, welche die Werte L und H annehmen kann. Eine Entscheidung der Einrichtung LDL, welche in einer Änderung der Ausgangs-Situation resultiert, wird getroffen, sobald bei der Ausgangs-Situation mindestens eine der drei Auslastungen den Wert H aufweist. In den End-Situationen der Figur 3 wird gegenüber den Ausgangs-Situationen eine feinere Granularität angenommen. Der hierzu verwendete mittlere Wert M der Auslastung liegt unterhalb dem Schwellenwert H, ab welchem eine Entscheidung der Einrichtung LDL ausgelöst wird.
1) Gemäß der ersten Ausgangs-Situation sind das Netzelement NE, der Elementmanager EMS, und das Netz OAM niedrig ausgelastet. In diesem Fall ist anhand des oben erläuterten Schwellenwertkriteriums keine Entscheidung der Einrichtung LDL nötig, welche eine Umverteilung der Auslastungen bewirkt. Die zur ersten Ausgangs-Situation der Figur 2 korrespondierende End-Situation der Figur 3 unterscheidet sich somit hinsichtlich der Auslastungen nicht von der Ausgangs-Situation.
2) Gemäß der zweiten Ausgangs-Situation sind das Netzelement NE und das Netz OAM wenig ausgelastet, während der Elementmanager EMS stark ausgelastet ist. Dies kann aus einer Elementmanager EMS -zentrierten Verarbeitung der Performance Daten folgen. Die Einrichtung LDL entscheidet in diesem Fall, einen Teil der Verarbeitung der Performance Daten von dem Elementmanager EMS auf das Netzelement NE zu verlagern, so dass bei der resultierenden End-Situation der Figur 3 eine mittlere Auslastung für das Netzelement NE und den Elementmanager EMS, und nach wie vor eine niedrige Auslastung des Netzes OAM vorliegt. Diese End-Situation entspricht einer hybriden Verarbeitung der Performance Daten, d.h. sowohl das Netzelement NE als auch der Elementmanager EMS führen Teile der Verarbeitung der Performance Daten durch. Durch die Reduzierung der Auslastung des Elementmanagers EMS von der starken auf die mittlere Auslastung stehen die verarbeiten Performance Daten dem Bestandteil DD-EMS rascher zur Verfügung, da gemäß der betrachteten zweiten Ausgangs-Situation die starke Auslastung des Elementmanagers EMS der limitierende Faktor bzw. der Engpass war.
3) Gemäß der dritten Ausgangs-Situation sind das Netzelement NE und der Elementmanager EMS wenig ausgelastet, während das Netz OAM stark ausgelastet ist. Die Einrichtung LDL entscheidet in diesem Fall, einen Teil der Verarbeitung der Performance Daten von dem Elementmanager EMS auf das Netzelement NE zu verlagern, so dass bei der resultierenden End-Situation eine mittlere Auslastung für das Netzelement NE und eine niedrige Auslastung für den Elementmanager EMS vorliegt. Dies entspricht einer Netzelement NE -zentrierten Verarbeitung der Performance Daten. Die Auslastung des Netzes OAM wurde von der starken Auslastung auf eine mittlere Auslastung reduziert. Denn aufgrund der stärkeren Verarbeitung der Performance Daten durch das Netzelement NE wird der Umfang der über das Netz OAM zu übertragenden Performance Daten reduziert. Durch die Reduzierung der Auslastung des Netzes OAM von der starken auf die mittlere Auslastung stehen die verarbeiten Performance Daten dem Bestandteil DD-EMS rascher zur Verfügung, da gemäß der betrachteten dritten Ausgangs-Situation die starke Auslastung des Netzes OAM der limitierende Faktor war.
4) Gemäß der vierten Ausgangs-Situation ist das Netzelement NE wenig ausgelastet, während der Elementmanager EMS und das Netz OAM stark ausgelastet sind. Dies kann aus einer Elementmanager EMS -zentrierten Verarbeitung der Performance Daten folgen. Die Einrichtung LDL entscheidet in diesem Fall, einen Teil der Verarbeitung der Performance Daten von dem Elementmanager EMS auf das Netzelement NE zu verlagern, so dass bei der resultierenden End-Situation eine mittlere Auslastung für das Netzelement NE und für den Elementmanager EMS vorliegen. Diese End-Situation entspricht einer hybriden Verarbeitung der Performance Daten, d.h. sowohl das Netzelement NE als auch der Elementmanager EMS führen Teile der Verarbeitung der Performance Daten durch. Die Auslastung des Netzes OAM wurde von der starken Auslastung auf eine mittlere Auslastung reduziert. Denn aufgrund der stärkeren Verarbeitung der Performance Daten durch das Netzelement NE wird der Umfang der über das Netz OAM zu übertragenden Performance Daten reduziert. Durch die Reduzierung der Auslastung des Netzes OAM und des Elementmanagers EMS jeweils von der starken auf die mittlere Auslastung stehen die verarbeiten Performance Daten dem Bestandteil DD-EMS rascher zur Verfügung, da gemäß der betrachteten vierten Ausgangs-Situation die starke Auslastung von Netz OAM und Elementmanager EMS die limitierenden Faktoren waren.
5) Gemäß der fünften Ausgangs-Situation ist das Netzelement NE stark ausgelastet, während der Elementmanager EMS und das Netz OAM wenig ausgelastet sind. Dies kann aus einer Netzelement NE -zentrierten Verarbeitung der Performance Daten folgen. Die Einrichtung LDL entscheidet in diesem Fall, einen Teil der Verarbeitung der Performance Daten von dem Netzelement NE auf den Elementmanager EMS zu verlagern, so dass bei der resultierenden End-Situation der Figur 3 eine mittlere Auslastung für das Netzelement NE und für den Elementmanager EMS vorliegt. Diese End-Situation entspricht einer hybriden Verarbeitung der Performance Daten, d.h. sowohl das Netzelement NE als auch der Elementmanager EMS führen Teile der Verarbeitung der Performance Daten durch. Die Auslastung des Netzes OAM wurde von der geringen Auslastung auf eine mittlere Auslastung erhöht. Denn aufgrund der reduzierten Verarbeitung der Performance Daten durch das Netzelement NE wird der Umfang der über das Netz OAM zu übertragenden Performance Daten erhöht. Durch die Reduzierung der Auslastung des Netzelementes NE von der starken auf die mittlere Auslastung stehen die verarbeiten Performance Daten dem Bestandteil DD-EMS rascher zur Verfügung, da gemäß der fünften Ausgangs-Situation die starke Auslastung des Netzelementes NE der limitierende Faktor war.
6) Gemäß der sechsten Ausgangs-Situation sind das Netzelement NE und der Elementmanager EMS stark ausgelastet, während das Netz OAM wenig ausgelastet ist. Dies kann aus einer hybriden Verarbeitung der Performance Daten folgen. Die Einrichtung LDL entscheidet in diesem Fall, einen Teil der Verarbeitung der Performance Daten von dem Netzelement NE auf den Elementmanager EMS zu verlagern, so dass bei der resultierenden End-Situation eine mittlere bis starke Auslastung für das Netzelement NE vorliegt, und eine starke bis übermäßige Auslastung für den Elementmanager EMS. Die Auslastung des Netzes OAM wurde von der geringen Auslastung auf eine geringe bis mittlere Auslastung erhöht. Denn aufgrund der reduzierten Verarbeitung der Performance Daten durch das Netzelement NE wird der Umfang der über das Netz OAM zu übertragenden Performance Daten erhöht. In diesem sechsten Fall wird das Zur-Verfügung-Stehen der Performance Daten für den Bestandteil DD-EMS nicht notwendigerweise beschleunigt, denn durch die Umverteilung der Verarbeitung kann der Elementmanager EMS in Überlast geraten. Trotz diesem nachteiligen Effekt der Überlast ist es vorteilhaft, die Auslastung des Netzelementes NE durch eine Reduzierung der Verarbeitung der Performance Daten zu verringern, denn eine Überlastung des Netzelementes NE sollte grundsätzlich verhindert werden. Ein überlastetes Netzelement NE wirkt sich nämlich in der Regel direkt auf die Nutzer des Kommunikationssystems aus, während ein derartiger direkter Effekt bei einem überlasteten Elementmanager EMS nicht zu erwarten ist.
7) Gemäß der siebten Ausgangs-Situation sind das Netzelement NE und das Netz OAM stark ausgelastet, während der Elementmanager EMS wenig ausgelastet ist. Dies kann aus einer Netzelement NE -zentrierten Verarbeitung der Performance Daten folgen. Die Einrichtung LDL entscheidet in diesem Fall, einen Teil der Verarbeitung der Performance Daten von dem Netzelement NE auf den Elementmanager EMS zu verlagern, so dass bei der resultierenden End-Situation eine mittlere bis starke Auslastung für das Netzelement NE vorliegt, und eine niedrige bis mittlere Auslastung für den Elementmanager EMS. Die Auslastung des Netzes OAM wurde von der starken Auslastung auf eine starke bis übermäßige Auslastung erhöht. Denn aufgrund der reduzierten Verarbeitung der Performance Daten durch das Netzelement NE wird der Umfang der über das Netz OAM zu übertragenden Performance Daten erhöht. Auch in diesem Fall wird das Zur-Verfügung-Stehen der Performance Daten für den Bestandteil DD-EMS nicht notwendigerweise beschleunigt, denn durch die Umverteilung der Verarbeitung kann das Netz OAM in Überlast geraten. Trotz diesem nachteiligen Effekt der Überlast ist es vorteilhaft, die Auslastung des Netzelementes NE durch eine Reduzierung der Verarbeitung der Performance Daten zu verringern, denn eine Überlastung des Netzelementes NE sollte grundsätzlich verhindert werden. Ein überlastetes Netzelement NE wirkt sich nämlich in der Regel direkt auf die Nutzer des Kommunikationssystems aus, während ein derartiger direkter Effekt bei einem überlasteten Netz OAM nicht zu erwarten ist.
8) Gemäß der achten Ausgangs-Situation sind das Netzelement NE, der Elementmanager EMS, und das Netz OAM stark ausgelastet. Dies kann aus einer hybriden Verarbeitung der Performance Daten folgen. Die Einrichtung LDL entscheidet in diesem Fall, einen Teil der Verarbeitung der Performance Daten von dem Netzelement NE auf den Elementmanager EMS zu verlagern, so dass bei der resultierenden End-Situation eine mittlere bis starke Auslastung für das Netzelement NE vorliegt, und eine starke bis übermäßige Auslastung für den Elementmanager EMS. Die Auslastung des Netzes OAM wurde von der starken Auslastung auf eine starke bis übermäßige Auslastung erhöht. Denn aufgrund der reduzierten Verarbeitung der Performance Daten durch das Netzelement NE wird der Umfang der über das Netz OAM zu übertragenden Performance Daten erhöht. In diesem Fall wird das Zur-Verfügung-Stehen der Performance Daten für den Bestandteil DD-EMS nicht notwendigerweise beschleunigt, denn durch die Umverteilung der Verarbeitung können sowohl das Netz OAM als auch der Elementmanager EMS in Überlast geraten. Trotz diesem nachteiligen Effekt der Überlast ist es vorteilhaft, die Auslastung des Netzelementes NE durch eine Reduzierung der Verarbeitung der Performance Daten zu verringern, denn eine Überlastung des Netzelementes NE sollte grundsätzlich verhindert werden. Ein überlastetes Netzelement NE wirkt sich nämlich in der Regel direkt auf die Nutzer des Kommunikationssystems aus, während ein derartiger direkter Effekt bei einem überlasteten Elementmanager EMS und einem überlasteten Netz OAM nicht zu erwarten ist.

Bei der sechsten, siebten und achten Ausgangs-Situation ist aufgrund der Umsetzung der Entscheidung der Einrichtung LDL jeweils eine Überlast von Netz OAM und/oder Elementmanager EMS möglich. Diese Entscheidungen werden jeweils getroffen, um das Netzelement NE vor einer Überlast zu schützen. Tritt eine Überlast von Netz OAM und/oder Elementmanager EMS auf, kann die Verarbeitung der Performance Daten durch den Elementmanager EMS und/oder ihre Übertragung vom Netzelement NE zum Elementmanager EMS reduziert werden. Abhängig von der ergriffenen Maßnahme sind verschiedene End-Zustände möglich, wie in Figur 3 dargestellt.

Zusätzlich zur erläuterten Anpassung der Aufteilung der Verarbeitung der Performance Daten können weitere Anpassungen zur Unterstützung des erwünschten Effektes eingesetzt werden. Hierbei kann es sich z.B. um eine Verringerung der Zeitabstände handeln, mit welchen die Performance Daten von dem Netzelemente NE erfasst werden, oder den Umfang oder die Qualität der von dem Netzelement NE zu erfassenden Performance Daten.

Als entscheidungsrelevante Parameter wurden gemäß den Figuren 2 und 3 die Auslastungen des Netzelementes NE, des Elementmanagers EMS und des Netzes OAM verwendet. Abweichend hiervon ist es möglich, dass die Einrichtung LDL ihre Entscheidungen abhängig von lediglich einem oder zweien der drei Auslastungs-Größen trifft. Dieses Vorgehen eignet sich z.B. dann, wenn eine oder zwei der Auslastungs-Größen nicht oder lediglich unter großem Aufwand ermittelbar sind. Ferner wird durch die Berücksichtigung einer reduzierten Anzahl von entscheidungsrelevanten Parametern die Komplexität des Entscheidungsprozesses verringert.

Das vorgestellte Verfahren ermöglicht eine dynamische Anpassung der Aufteilung der Verarbeitung der Performance Daten zwischen dem Netzelement NE und dem Elementmanager EMS. Durch diese Anpassung kann eine Änderung der Auslastungen realisiert werden, durch welche Überlastzustände insbesondere des Netzelementes NE vermieden werden können. Insbesondere ermöglicht es die Anpassung, dass die Performance Daten dem Operator rascher zur Verfügung stehen.

Die Anpassung der Aufteilung der Verarbeitung der Performance Daten kann während dem normalen Betrieb des Systems erfolgen. Es sind hierfür keine Neu- oder Umkonfigurationen nötig. Weiterhin wird durch die Anpassung ermöglicht, dass der Operator nicht zum Zeitpunkt der Inbetriebnahme konservative Abschätzungen z.B. hinsichtlich der Anzahl der im Rahmen des Performance Management eingesetzten Zähler und/oder hinsichtlich der benötigten Übertragungsressourcen des Netzes OAM und/oder hinsichtlich der benötigten Verarbeitungs-Ressourcen von Netzelement NE und Elementmanager EMS vornehmen muss, um eventuellen Engpässen vorzubeugen. Denn im Fall es Auftretens eines Engpasses kann dieser durch die beschriebene Art des Wechsels der Aufteilung behoben werden.

Durch die Anpassung der Aufteilung der Verarbeitung der Performance Daten werden die zur Verfügung stehenden Verarbeitungs-Ressourcen effizient ausgenutzt. Würde die Verarbeitung der Performance Daten beispielsweise nur durch den Elementmanager EMS durchgeführt, müsste bei einer starken oder übermäßigen Auslastung des Elementmanagers EMS die Verarbeitung der Performance Daten verlangsamt oder gestoppt werden, obwohl gegebenenfalls dem Netzelement NE zum gleichen Zeitpunkt ungenutzte Verarbeitungs-Ressourcen zur Verfügung stehen. Dieser ungünstige Zustand kann durch die Anpassung der Aufteilung der Verarbeitung der Performance Daten vermieden werden, da hierdurch eine Übertragung der Verarbeitung oder von Teilen der Verarbeitung der Performance Daten auf das Netzelement NE ermöglicht wird.

## Patentansprüche

1. Verfahren zum Betreiben eines zumindest einen Manager (EMS) und einen Agenten (NE) umfassenden Managementsystems, bei welchem
Daten von dem Agenten (NE) an den Manager (EMS) übertragen werden, und
die Daten verarbeitet werden, wobei die Datenverarbeitung durch den Agenten (NE) und/oder den Manager (EMS) erfolgt,
**dadurch gekennzeichnet,**
**dass** von einer ersten Aufteilung der Datenverarbeitung zwischen dem Agenten (NE) und dem Manager (EMS) gewechselt wird zu einer zweiten Aufteilung der Datenverarbeitung zwischen dem Agenten (NE) und dem Manager (EMS).

2. Verfahren nach Anspruch 1, bei dem
der Manager (EMS) bei der zweiten Aufteilung gegenüber der ersten Aufteilung weniger Datenverarbeitung durchführt, und
der Agent (NE) bei der zweiten Aufteilung gegenüber der ersten Aufteilung mehr Datenverarbeitung durchführt.

3. Verfahren nach Anspruch 1, bei dem
der Manager (EMS) bei der zweiten Aufteilung gegenüber der ersten Aufteilung mehr Datenverarbeitung durchführt, und
der Agent (NE) bei der zweiten Aufteilung gegenüber der ersten Aufteilung weniger Datenverarbeitung durchführt.

4. Verfahren nach einem der Ansprüche 1 bis 3, bei dem
eine Entscheidung zum Wechsel von der ersten zu der zweiten Aufteilung getroffen wird in Abhängigkeit von
• Informationen (INFO-PLM-NE) betreffend eine Auslastung des Agenten (NE),
und/oder
• Informationen (INFO-PLM-EMS) betreffend eine Auslastung des Managers (EMS),
und/oder
• Informationen (INFO-NLM) betreffend eine Auslastung einer Kommunikationsschnittstelle (OAM) zwischen dem Manager (EMS) und dem Agenten (NE).

5. Verfahren nach Anspruch 4, bei dem
es sich bei der Auslastung bzw. den Auslastungen um eine binäre Größe (H, L) handelt.

6. Verfahren nach Anspruch 4 oder 5, bei dem
die Entscheidung unter der Voraussetzung getroffen wird, dass
• die Informationen (INFO-PLM-NE) betreffend die Auslastung des Agenten (NE),
und/oder
• die Informationen (INFO-PLM-EMS) betreffend die Auslastung des Managers (EMS),
und/oder
• die Informationen (INFO-NLM) betreffend die Auslastung der Kommunikationsschnittstelle (OAM) zwischen dem Manager (EMS) und dem Agenten (NE)
einen Schwellenwert über- oder unterschreiten.

7. Verfahren nach einem der Ansprüche 1 bis 6, bei dem
aufgrund des Wechsels eine Auslastung des Agenten (NE) reduziert wird.

8. Verfahren nach einem der Ansprüche 1 bis 7, bei dem
aufgrund des Wechsels eine Auslastung des Managers (EMS) reduziert wird.

9. Verfahren nach einem der Ansprüche 1 bis 8, bei dem
aufgrund des Wechsels eine Auslastung einer Kommunikationsschnittstelle (OAM) zwischen dem Manager (EMS) und dem Agenten (NE) reduziert wird.

10. Verfahren nach einem der Ansprüche 1 bis 9, bei dem
die verarbeiteten Daten dem Manager (EMS) bei Verwendung der zweiten Aufteilung schneller zur Verfügung stehen als bei Verwendung der ersten Aufteilung.

11. Verfahren nach einem der Ansprüche 1 bis 10, bei dem
eine Entscheidung zum Wechsel von der ersten zu der zweiten Aufteilung getroffen wird und Anweisungen (INFO-DP-NE) zur Umsetzung der Entscheidung lediglich an den Agenten (NE) ergehen.

12. Verfahren nach einem der Ansprüche 1 bis 11, bei dem
es sich bei den Daten um Performance Management Daten handelt.

13. Manager (EMS) für ein zumindest den Manager (EMS) und
einen Agenten (NE) umfassendes Managementsystem, mit Mitteln zum Empfangen von Daten von dem Agenten (NE), und Mitteln zum Verarbeiten der Daten gemäß einer ersten Aufteilung der Datenverarbeitung zwischen dem Agenten (NE) und dem Manager (EMS),
**gekennzeichnet durch**
Mittel zum Wechseln der Aufteilung der Datenverarbeitung zwischen dem Agenten (NE) und dem Manager (EMS) von der ersten Aufteilung zu einer zweiten Aufteilung.

14. Agent (NE) für ein zumindest einen Manager (EMS) und den Agenten (NE) umfassendes Managementsystem, mit
Mitteln zum Verarbeiten von Daten gemäß einer ersten Aufteilung der Datenverarbeitung zwischen dem Agenten (NE) und dem Manager (EMS), und
Mitteln zum Senden der Daten zu dem Manager (EMS),
**gekennzeichnet durch**
Mittel zum Wechseln der Aufteilung der Datenverarbeitung zwischen dem Agenten (NE) und dem Manager (EMS) von der ersten Aufteilung zu einer zweiten Aufteilung.

15. Managementsystem, umfassend zumindest einen Manager (EMS) nach Anspruch 13 und einen Agenten (NE) nach Anspruch 14.
